# EUROPEAN PATENT APPLICATION

(11) **EP 2 863 603 A1**
(43) Date of publication of application: **22.04.2015**
(21) Application number: 13306430.3
(22) Date of filing: 18.10.2013
(51) Int. Cl.: H04L 29/06

(54) **A method for optimizing the capability discovery of terminals in an IMS network**

(71) Applicant: ALCATEL LUCENT, 92100 Boulogne-Billancourt (FR)
(72) Inventor: Le Gall, Jean-Christophe, 44708 Orvault (FR)
(74) Representative: Sciaux, Edmond

(57) **Abstract**

A method for optimizing the capability discovery of terminals in an Internet Protocol Multimedia Subsystem (IMS) network using the Session Initialization Protocol (SIP), each terminal comprising an address book storing the identifiers of a plurality of users of other terminals, comprises the steps of:
- reading a plurality of user identifiers stored in the address book of a first terminal (User A),
- sending (201) a first enhanced OPTIONS SIP message containing a plurality of read user identifiers, from a user agent of the first terminal to a calling IMS core where the first terminal is registered,
- receiving (201) the first enhanced OPTIONS SIP message in the calling IMS core, and extracting the user identifiers contained in this first enhanced OPTIONS SIP message,
- requesting (202-205), from a called IMS core, the capabilities of the terminals respectively corresponding to a plurality of user identifiers extracted from the first enhanced OPTIONS SIP message,
- receiving (208, 211-213), in the calling IMS core, the capabilities of a plurality of terminals corresponding to user identifiers extracted from the first enhanced OPTIONS SIP message, as far as the corresponding users have been found and are available for a connection,
- then sending (214) from the calling IMS core to the first terminal (User A), a first enhanced 200 OK SIP message containing the received capabilities of a plurality of users.

## Description

### BACKGROUND OF THE INVENTION

### Field of the invention

The present invention generally relates to the Rich Communication Services (RCS) based on the Internet Protocol Multimedia Subsystems (IMS). Main features of RCS are:
- Enhanced Phonebook: Enhanced contacts information such as presence and service discovery.
- Enhanced Messaging: enables a large variety of messaging options including chat, emoticons, location share and file sharing.
   - Enriched Calls: enables multimedia content sharing during a voice call, video call and video sharing.

The Global Mobile System Association (GSMA) standardization group has defined, in the RCS-e standard a way to discover RCS capabilities through a process based on sending "OPTION" messages of the Session Initiation Protocol (SIP). This latter is a signaling protocol, widely used for controlling multimedia communication sessions such as voice and video calls over Internet Protocol (IP) networks. The protocol SIP defines the messages that are sent between peers for establishment, termination and other essential elements of a call. A SIP user agent performs the role of a client, which sends SIP requests; and a user agent server receives the requests and returns a SIP response.

The SIP request message "OPTIONS" enables a user agent to query another user agent, or a proxy server, as to its capabilities, i. e. it enables a client to discover information about: the supported methods, content types, extensions, codecs, etc, without "ringing" the other party. For example, before a client sends a SIP INVITE message containing a "Require" header field, the client can query the destination user agent server with a SIP OPTIONS message to check whether the required service is supported by the destination user agent. The capability or service discovery enables a user to know the subset of RCS-e services that is available to access and/or communicate with another user.

The primary and mandatory method for capability discovery is based on the OPTIONS SIP message. For example, this procedure is started after first time registration to obtain the registration state and default set of capabilities for each contact in the user's phone address book: one OPTIONS SIP request message is sent per IMS identity stored in the address book.

This procedure can lead to an overload of the network, as one OPTIONS SIP request message is sent per user in the phone's address book. For example, after a crash of an IMS node (requiring new SIP registration), many terminals with RCS-e capability try to register again at IMS level. If you consider 1000 subscribers, each with 100 entries in his/her address book, it leads to 1000 x 100 OPTIONS SIP request messages sent by all the RCS-e clients. In race condition due to failure/problem in IMS core, this set of messages sent at the same time may overload the IMS core network.

### Description of the prior art

In the GSMA RCS-e Advanced Communications document "Services and client specification, version 1.2.2, section 2.3.1.3", some methods are proposed to reduce the load due to the sending of OPTIONS SIP request messages, for capability discovery per user.

The client may implement a method to reduce the number of OPTIONS requests in situations where the OPTIONS message exchange happens too often. Examples of such methods are listed below:
- Introducing a degree of hysteresis (i. e. a capability update is sent/requested only when the circumstances which led to the change remain stable for a certain period of time).
- Implementing a validity timer (If the latest capabilities were fetched less than X seconds ago, they are still considered as valid).

These methods reduce the frequency of sending OPTIONS SIP message for RCS-e capabilities discovery but doesn't reduce the number of messages sent by each client. For example, such mechanism is triggered after first initial SIP registration: Initial SIP registration can occur due to the crash of one node in the IMS network. This crash implies that many end users are going to try to register again at the same time. This leads to many capabilities discovery at the same time, with a huge number of OPTIONS SIP messages sent by the clients, and potentially could lead to overload the IMS core network.

The aim of the present invention is to drastically minimize the number of OPTIONS SIP messages sent by RCS-e clients to the IMS core(s).

### SUMMARY OF THE INVENTION

The object of the invention is a method for optimizing the capability discovery of terminals in an Internet Protocol Multimedia Subsystem network using the Session Initialization Protocol, each terminal comprising an address book storing the identifiers of a plurality of users of other terminals, comprising the steps of:
- reading a plurality of user identifiers stored in the address book of a first terminal,
- sending a first enhanced OPTIONS SIP message containing a plurality of read user identifiers, from a user agent of the first terminal to a calling IMS core where the first terminal is registered,
- receiving the first enhanced OPTIONS SIP message in the calling IMS core, and extracting the user identifiers contained in this first enhanced OPTIONS SIP message,
- requesting, from at least one called IMS core, the capabilities of terminals respectively corresponding to user identifiers extracted from the first enhanced OPTIONS SIP message,
- receiving, in the calling IMS core, the capabilities of terminals corresponding to user identifiers extracted from the first enhanced OPTIONS SIP message, as far as the corresponding users have been found and are available for a connection,
- then sending from the calling IMS core to the first terminal, a first enhanced 200 OK SIP message containing the received capabilities of a plurality of users.

Thanks to the first enhanced OPTIONS SIP message containing a plurality of read user identifiers there is no need to send as many request messages as there are contacts in the phonebook.
Thanks to the first enhanced 200 OK SIP message containing the capabilities of a plurality of terminals corresponding to the user identifiers mentioned in the first enhanced OPTIONS SIP message, as far as they have been found and are available for a connection, there is no need to send as many response messages as there are contacts in the phonebook.

Of course, if the number of contacts is very high, the list of the user identifiers can be segmented and distributed into several enhanced OPTIONS SIP messages.
Similarly, the received capabilities can be segmented and distributed into several enhanced OK SIP messages.

I n a peculiar embodiment of the method according to the present invention, requesting, from a calling IMS core, the capabilities of a plurality of terminals corresponding to user identifiers extracted from the first enhanced OPTIONS SIP message, comprises the step of sending a second enhanced OPTIONS SIP message, from the calling IMS core to at least one called IMS core where some of the users corresponding to the extracted user identifiers are registered; this second enhanced OPTIONS SIP message containing the user identifiers of a plurality of users that are registered in or controlled by this called IMS core;
and wherein receiving the capabilities of terminals corresponding to user identifiers extracted from the first enhanced OPTIONS SIP message, as far as the corresponding users have been found and are available for a connection, comprises the step of sending a second enhanced 200 OK SIP message from this called IMS core to the calling IMS core, this second enhanced 200 OK SIP message containing the received capabilities for a plurality of users that are registered in or are controlled by this called IMS core.

Thanks to the second enhanced OPTIONS SIP message containing a plurality of read user identifiers corresponding to users that are registered in a same called IMS core; and thanks to the second enhanced 200 OK SIP message containing the capabilities of a plurality of terminals corresponding to the user identifiers mentioned in the second enhanced OPTIONS SIP message, as far as they have been found and are available for a connection, the number of messages exchanged between the IMS cores is greatly reduced.

Another object of the invention is a user agent comprising machine executable program instructions, which, when executed on a computer, cause the computer to perform all the method steps of reading a plurality of user identifiers stored in the address book of a terminal, and sending a first enhanced OPTIONS SIP message containing a plurality of read user identifiers, to a calling IMS core.

Another object of the invention is an application server comprising machine executable program instructions, which, when executed on a computer, cause the computer to perform all the method steps of:
- memorizing the respective locations of users,
- receiving a first enhanced OPTIONS SIP message containing a plurality of user identifiers, from the user agent of a first terminal,
- extracting the user identifiers contained in this first enhanced OPTIONS SIP message,
- sending a second enhanced OPTIONS SIP message to at least one called IMS core where some of the users, corresponding to the extracted user identifiers, are registered in or are controlled by; this second enhanced OPTIONS SIP message containing user identifiers of a plurality of users that are registered in or are controlled by the called IMS core;
- then receiving a first enhanced 200 OK SIP message from this called IMS core, this first enhanced 200 OK SIP message containing the capabilities of a plurality of users that have been found and are available for a connection,
- then sending to the terminal of the first user (User A), a second enhanced 200 OK SIP message containing the capabilities of a plurality of terminals corresponding to user identifiers extracted from the first enhanced OPTIONS SIP message, as far as the corresponding users have been found and are available for a connection.

Another object of the invention is an application server comprising machine executable program instructions, which, when executed on a computer, cause the computer to perform all the method steps of:
- receiving an enhanced OPTIONS SIP message from a calling IMS, containing a plurality of users that are registered in or are controlled by a called IMS core associated to this application server,
- receiving the capabilities of a plurality of terminals corresponding to user identifiers extracted from the second enhanced OPTIONS SIP message, for which the corresponding users have been found and are available for a connection,
- then sending a second enhanced 200 OK SIP message from the called IMS core to the calling IMS core, this second enhanced 200 OK SIP message containing the received capabilities of a plurality of users.

### BRIEF DESCRIPTION OF THE DRAWINGS

In order to illustrate in detail features and advantages of embodiments of the present invention, the following description will be with reference to the accompanying drawings. If possible, like or similar reference numerals designate the same or similar components throughout the figures thereof and description, in which:
- Figure 1 shows a signaling flow for an example in which user agents and IMS cores use a method according to the prior art.
- Figure 2 shows a signaling flow for an example in which user agents and IMS cores use a first embodiment of the method according to the invention.
- Figure 3 shows a signaling flow for an example in which user agents and IMS cores a second embodiment of the method according to the invention.

### DETAILED DESCRIPTION OF THE PREFERRED EMBODIMENTS

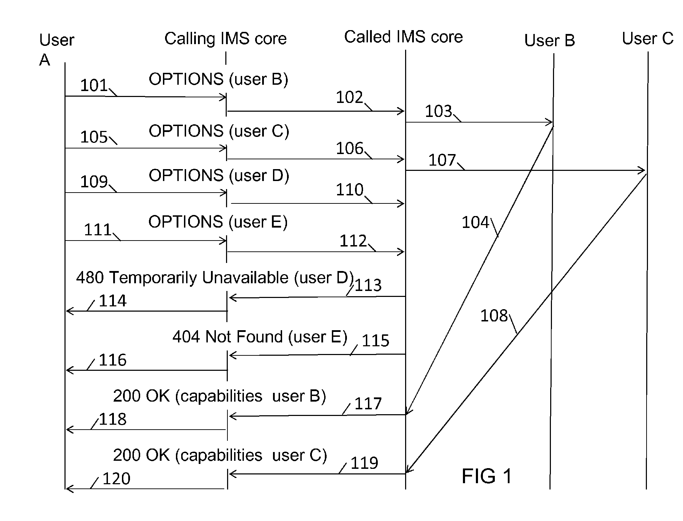

**Figure 1** shows a signaling flow for an example in which the user agent of a terminal referenced as user A, a calling IMS core and a called IMS core make a capability query procedure, by using a method according to the prior art. For instance the user A has four contact addresses in its address book: User B, user C, user D, user E being subscribers to a same RCS operator.

**Step 101:** The user agent of user A sends a first classical OPTIONS SIP message requesting the RCS-e capabilities for a first contact, user B, in its address book: This message OPTIONS contains an identifier of the user B only.

**Step 102:** The calling IMS core receives the OPTIONS message that contains an identifier of the user B, and forwards it to the called IMS core.

**Step 103:** The called IMS core forwards the OPTIONS message that contains an identifier of the user B, to the user agent of the user B, because the user B has an IMS compatible terminal that has been registered at the called IMS core.

**Step 104:** The user agent of the user B responds to the called IMS core, by sending a classical 200 OK SIP message containing data describing the capabilities of the terminal of the user B.

**Step 105:** The user agent of user A sends a second classical OPTIONS SIP message requesting the RCS-e capabilities for a second contact, user C, in its address book: This message OPTIONS contains an identifier of the user C only.

**Step 106:** The calling IMS core receives the OPTIONS message that contains an identifier of the user C, and forwards it to the called IMS core.

**Step 107:** The called IMS core forwards the OPTIONS message that contains an identifier of the user C, to the user agent of the user C, because the user C has an IMS compatible terminal that has registered at the called IMS core.

**Step 108:** The user agent of the user C responds to the called IMS core, by sending a classical 200 OK SIP message containing data describing the capabilities of the terminal of the user C.

**Step 109:** The user agent of user A sends a third classical OPTIONS SIP message requesting the RCS-e capabilities for a third contact, user D, in its address book: This message OPTIONS contains an identifier of the user D only.

**Step 110:** The calling IMS core receives the OPTIONS message that contains an identifier of the user D, and forwards it to the called IMS core.

**Step 111:** The user agent of user A sends a fourth classical OPTIONS SIP message requesting the RCS-e capabilities for a fourth contact, user E, in its address book: This message OPTIONS contains an identifier of the user E only.

**Step 112:** The calling IMS core receives the OPTIONS message that contains an identifier of the user E, and forwards it to the called IMS core.

**Step 113:** The called IMS core responds to the OPTIONS SIP message containing the identifier of the user D. It sends, to the calling IMS core, a classical **480** Temporarily Unavailable SIP message containing the identifier of the user D. It means that the terminal of user D is currently unavailable (e.g. not logged in, or logged in such a manner as to preclude communication).

**Step 114:** The calling IMS core receives the 480 Temporarily Unavailable message containing the identifier of the user D, and forwards it to the user agent of the user A.

**Step 115:** The called IMS core responds to the OPTIONS SIP message containing the identifier of the user E. It sends, to the calling IMS core, a classical 404 Not Found message containing the identifier of the user E, because the user E does not exist at the domain specified in the OPTIONS request message. This status is also returned if the domain, in the request, does not match any of the domains handled by the recipient of the request.

**Step 116:** The calling IMS core receives the 404 Not Found message containing the identifier of the user E, and forwards it to the user agent of the user A.

**Step 117:** The called IMS core sends, to the calling IMS core, a classical 200 OK SIP message containing data describing the capabilities of the terminal of the user B.

**Step 118:** The calling IMS core receives the 200 OK SIP message containing data describing the capabilities of the terminal of the user B, and forwards it to the user agent of the user A.

**Step 119:** The called IMS core sends, to the calling IMS core, a classical 200 OK SIP message containing data describing the capabilities of the terminal of the user C.

**Step 120:** The calling IMS core receives the 200 OK SIP message containing data describing the capabilities of the terminal of the user C, and forwards it to the user agent of the user A.

This example shows that a method according to the prior art implies sending as many OPTIONS messages, and response messages, as there are contacts in a user's phone book. This number of messages must be multiplied by the number of users that are registering at the same time.

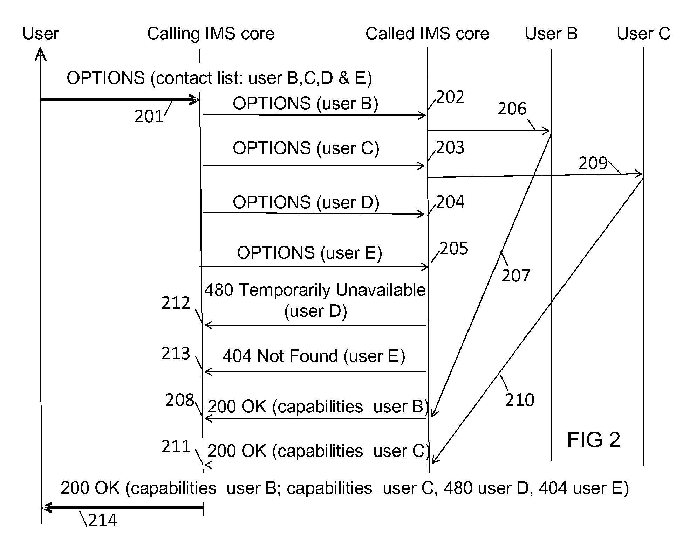

**Figure 2** shows a signaling flow for an example in which the user agents of users A, B, C, the calling IMS core and the called IMS core use a first embodiment of the method according to the invention. In a preliminary step (not represented), during the registration of the user A, the calling IMS core indicates, to the user A, that it supports the enhanced OPTIONS SIP message according to the invention. If the user agent of the user A supports the enhanced OPTIONS SIP message according to the invention, it will use it. Otherwise it will use the classical OPTIONS SIP message, as described above. In the example represented on Figure 2, the user agents of users A, B, C, the calling IMS core and the called IMS core support the enhanced OPTIONS SIP message according to the invention.

**Step 201:** The user agent of user A sends a single enhanced OPTIONS SIP message requesting the RCS-e capabilities for all the contacts, i. e. users A, B, C, D, E, registered in its address book. The enhanced message OPTIONS contains the respective identifiers of the users A, B, C, D, E.

**Step 202:** The calling IMS core receives the enhanced OPTIONS message that contains the respective identifiers of the users A, B, C, D, E, and it generates a classical OPTIONS SIP message requesting the RCS-e capabilities for a first contact in its address book. This OPTIONS message contains an identifier of the user B.

**Step 203:** The calling IMS core generates a classical OPTIONS SIP message requesting the RCS-e capabilities for a second contact in its address book. This OPTIONS message contains an identifier of the user C.

**Step 204:** The calling IMS core generates a classical OPTIONS SIP message requesting the RCS-e capabilities for a second contact in its address book. This OPTIONS message contains an identifier of the user D.

**Step 205:** The calling IMS core generates a classical OPTIONS SIP message requesting the RCS-e capabilities for a second contact in its address book. This OPTIONS message contains an identifier of the user E.

**Step 206:** The called IMS core forwards the first classical OPTIONS message, which contains an identifier of the user B, to the user agent of the user B, because the user B has an IMS compatible terminal that has registered at the called IMS core.

**Step 207:** The user agent of the user B responds to the called IMS core, by sending a classical 200 OK SIP message containing data describing the capabilities of the terminal of the user B.

**Step 208:** The called IMS core forwards, to the calling IMS core, the 200 OK SIP message containing data describing the capabilities of the terminal of the user B.

**Step 209:** The called IMS core forwards the second classical OPTIONS message, which contains an identifier of the user C, to the user agent of the user C, because the user C has an IMS compatible terminal that has registered at the called IMS core.

**Step 210:** The user agent of the user C responds to the called IMS core, by sending a classical 200 OK SIP message containing data describing the capabilities of the terminal of the user C.

**Step 211:** The called IMS core forwards, to the calling IMS core, the 200 OK SIP message containing data describing the capabilities of the terminal of the user C.

**Step 212:** The called IMS core sends a classical 480 Temporarily Unavailable message containing the identifier of the user E.

**Step 213:** The called IMS core sends a classical 404 Not Found message containing the identifier of the user D.

**Step 214:** When the calling IMS core has received capability information about all the users A, B, C, D mentioned in the enhanced OPTIONS SIP message requesting the RCS-e capabilities of the terminals of the users B, C, D, E, it responds to the user agent of the user A by sending an enhanced 200 OK message that contains the respective capabilities of the users B, C, D, E. In this example, the enhanced 200 OK message contains:
-- The identifier of the user B and the capabilities of the terminal of user B.
-- The identifier of the user C and the capabilities of the terminal of user C.
-- The identifier of the user D and the code 480.
-- The identifier of the user E and the code 404.

The enhanced OPTIONS SIP message and the enhanced 200 OK message according to the invention can also be used for reducing the number of signaling messages exchanged between the IMS cores.

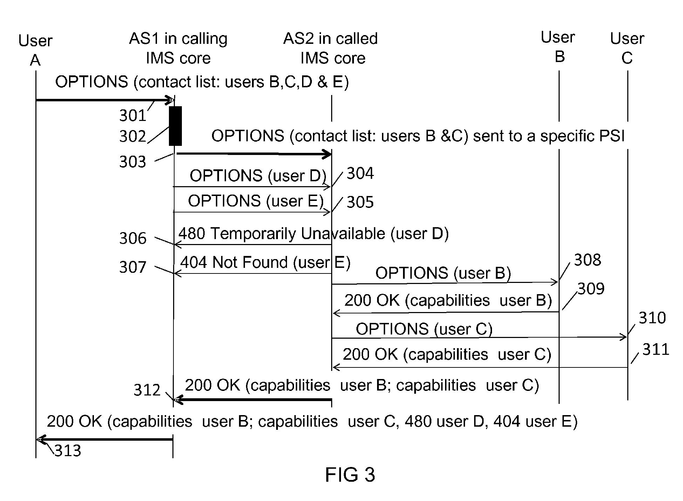

**Figure 3** shows a signaling flow for an example in which user agents and IMS cores use a second embodiment of the method according to the invention, wherein the IMS cores are respectively associated with application servers that are specific for reducing the number of signaling messages between the calling IMS core and the called IMS core. An application server AS1 is associated to the calling IMS core and an application server AS2 is associated to the called IMS core. The application servers AS1 comprises software means for periodically memorizing the location of all the users that have registered at the calling IMS core during previous signaling. The application servers AS2 comprises software means for memorizing the location of all the users that have registered at the called IMS core during previous signaling.
The other entities are the same as in the example described with reference to the Figure 2, i. e. the user agents of users A, B, C, the calling IMS core and the called IMS core support the enhanced OPTIONS SIP message in the same way.

**Step 301:** The user agent of user A sends a single enhanced OPTIONS SIP message requesting the RCS-e capabilities for all the contacts, users B, C, D, E, registered in its address book: This enhanced OPTIONS SIP message contains the list of the respective identifiers of the users B, C, D, E.

**Step 302:** The application server AS1, associated to the calling IMS core, receives the message sent by the user agent of user A. It extracts and processes the lists of user identifiers B, C, D, E contained in this message. By learning during previous signaling, it knows that the respective terminals of users B and C are controlled by a same IMS core (referenced as the called IMS core on Figure 3). It generates a single enhanced OPTIONS SIP message requesting the RCS-e capabilities for the users B and C: This enhanced message OPTIONS contains the respective identifiers of the users B and C.
As concerns the user D, it knows that it is temporarily unavailable. As concerns the user E, it knows that it cannot be found. So it will not propagate capability requests for the users D and E. This will be done separately in steps 304/305.

**Step 303:** The application server AS1, associated to the calling IMS core, forwards this enhanced OPTIONS message, requesting the RCS-e capabilities for the users B and C, to a specific public service address corresponding to the application server AS2 associated to the called IMS core.

**Step 304:** The application server AS1 sends, to the application server AS2, a classical OPTIONS SIP message requesting the RCS-e capabilities for a third contact, user D, in its address book: This message OPTIONS contains an identifier of the user D only.

**Step 305:** The application server AS1 sends, to the application server AS2, a classical OPTIONS SIP message requesting the RCS-e capabilities for a third contact, user E, in its address book: This message OPTIONS contains an identifier of the user E only.

**Step 306:** The application server AS2 associated to the called IMS core responds to the OPTIONS SIP message containing the identifier of the user D. It sends, to the calling IMS core, a classical 480 Temporarily Unavailable SIP message containing the identifier of the user D. It means that the terminal of user D is currently unavailable (e.g. not logged in, or logged in such a manner as to preclude communication).

**Step 307:** The application server AS2 associated to the called IMS core responds to the OPTIONS SIP message containing the identifier of the user E. It sends, to the calling IMS core, a classical 404 Not Found message containing the identifier of the user E, because the user E does not exist at the domain specified in the OPTIONS request message. This status is also returned if the domain, in the request, does not match any of the domains handled by the recipient of the request.

**Step 308:** When the application server AS2, associated to the called IMS core, receives the enhanced OPTIONS message, it extracts the list of users: B, C. It generates a first classical OPTIONS SIP message that contains an identifier of the user B, and sends it to the user agent of the user B, because the user B has an IMS compatible terminal that has registered at the called IMS core.

**Step 309:** The user agent of the user B responds to the called IMS core, by sending a classical 200 OK SIP message containing data describing the capabilities of the terminal of the user B.

**Step 310:** When the application server AS2, associated to the called IMS core, receives the enhanced OPTIONS message, it also generates a second classical OPTIONS message that contains an identifier of the user C, and sends it to the user agent of the user C, because the user C has an IMS compatible terminal that has registered at the called IMS core.

**Step 311:** The user agent of the user C responds to the called IMS core, by sending a classical 200 OK SIP message containing data describing the capabilities of the terminal of the user C.

**Step 312:** When the application server AS2, associated to the called IMS core, has got capability information about all the interrogated users that are registered at this called IMS CORE, i. e. the users B and C, it responds to the application server AS1 associated to the calling IMS node, by sending a single enhanced 200 OK message that contains the respective capabilities of the users B and C. So, this enhanced 200 OK message contains:
-- The identifier of the user B and the capabilities of the terminal of user B.
-- The identifier of the user C and the capabilities of the terminal of user C.

**Step 313:** When the application server AS1, associated to the calling IMS core, has received information about the respective capabilities of all the users A, B, C, D, E, i. e. the enhanced 200 OK message containing capability information about the users B and C, and the messages 480 and 404 indicating the absence of capability respectively for the users D and E, it responds to the user agent of the user A by sending an enhanced 200 OK message that contains the respective capabilities of the users B, C, D, E.
So this enhanced 200 OK message contains:
-- The identifier of the user B and the capabilities of the terminal of user B.
-- The identifier of the user C and the capabilities of the terminal of user C.
-- The identifier of the user D and the code 480 (Momentarily unavailable).
-- The identifier of the user E and the code 404 (Not found).

In the examples described above, only one IMS core intervened for simplifying the description. In real world, all the users registered in the address book are generally not registered or controlled by a same IMS core, but are managed by a plurality of IMS cores. This does not change the principle of the method according to the invention. At the step 303, the application server AS1, associated to the calling IMS core, sends several enhanced OPTIONS messages respectively to several specific public service addresses corresponding to several application servers respectively associated to several called IMS cores. Each of these enhanced OPTIONS message requests the RCS-e capabilities only for the users that are registered by or are controlled by the called IMS core that is the destination of this message.

## Claims

1. A method for optimizing the capability discovery of terminals in an Internet Protocol Multimedia Subsystem (IMS) network using the Session Initialization Protocol (SIP), each terminal comprising an address book storing the identifiers of a plurality of users of other terminals, comprising the steps of:
- reading a plurality of identifiers stored in the address book of a first terminal (User A),
- sending (201; 301) a first enhanced OPTIONS SIP message containing a plurality of read user identifiers, from a user agent of the first terminal to a calling IMS core where the first terminal is registered,
- receiving (201; 301) the first enhanced OPTIONS SIP message in the calling IMS core, and extracting the user identifiers contained in this first enhanced OPTIONS SIP message,
- requesting (202-205; 303), from at least one called IMS core, the capabilities of terminals respectively corresponding to user identifiers extracted from the first enhanced OPTIONS SIP message,
- receiving (208, 211-213; 312), in the calling IMS core, the capabilities of terminals corresponding to user identifiers extracted from the first enhanced OPTIONS SIP message, as far as the corresponding users have been found and are available for a connection,
- then sending (214; 313), from the calling IMS core to the first terminal (User A), a first enhanced 200 OK SIP message containing the received capabilities of a plurality of users.

2. A method according to the claim 1, wherein requesting (303), from at least one called IMS core, the capabilities of a plurality of terminals corresponding to user identifiers extracted from the first enhanced OPTIONS SIP message, comprises the step of sending (303) a second enhanced OPTIONS SIP message, from the calling IMS core to at least one called IMS core where some of the users corresponding to the extracted user identifiers are registered; this second enhanced OPTIONS SIP message containing the user identifiers of a plurality of users that are registered in or controlled by this called IMS core;
and wherein receiving the capabilities of terminals corresponding to user identifiers extracted from the first enhanced OPTIONS SIP message, as far as the corresponding users have been found and are available for a connection, comprises the step of sending (312) a second enhanced 200 OK SIP message from this called IMS core to the calling IMS core, this second enhanced 200 OK SIP message containing the received capabilities for a plurality of users that are registered in or controlled by this called IMS core.

3. A user agent comprising machine executable program instructions, which, when executed on a computer, cause the computer to perform all the method steps of: reading a plurality of user identifiers stored in the address book of a terminal, and sending (201, 301) a first enhanced OPTIONS SIP message containing a plurality of read user identifiers, to a calling IMS core.

4. An application server (AS1 ) comprising machine executable program instructions, which, when executed on a computer, cause the computer to perform all the method steps of:
- memorizing the respective locations of users,
- receiving (301) a first enhanced OPTIONS SIP message containing a plurality of user identifiers, from the user agent (A) of a first terminal,
- extracting (302) the user identifiers contained in this first enhanced OPTIONS SIP message,
- sending (303) a second enhanced OPTIONS SIP message to at least one called IMS core where some of the users, corresponding to the extracted user identifiers, are registered in or are controlled by; this second enhanced OPTIONS SIP message containing user identifiers of a plurality of users that are registered in or are controlled by the called IMS core;
- then receiving (312) a first enhanced 200 OK SIP message from this called IMS core, this first enhanced 200 OK SIP message containing the capabilities of a plurality of users that have been found and are available for a connection,
- then sending (313) to the terminal of the first user (User A), a second enhanced 200 OK SIP message containing the capabilities of a plurality of terminals corresponding to user identifiers extracted from the first enhanced OPTIONS SIP message, as far as the corresponding users have been found and are available for a connection.

5. An application server (AS2) comprising machine executable program instructions, which, when executed on a computer, cause the computer to perform all the method steps of:
- receiving (303) an enhanced OPTIONS SIP message from a calling IMS, containing e user identifiers of a plurality of users that are registered in or are controlled by a called IMS core associated to this application server (AS2),
- receiving (309, 311) the capabilities of a plurality of terminals corresponding to user identifiers extracted from the second enhanced OPTIONS SIP message, for which the corresponding users have been found and are available for a connection,
- then sending (312) a second enhanced 200 OK SIP message from the called IMS core to the calling IMS core, this second enhanced 200 OK SIP message containing the received capabilities of a plurality of users.
